# EUROPÄISCHE PATENTSCHRIFT

(11) **EP 2 195 192 B1**
(45) Veröffentlichungstag und Bekanntmachung des Hinweises auf die Patenterteilung: **17.07.2013**
(21) Anmeldenummer: 08801733.0
(22) Anmeldetag: 27.08.2008
(51) Int. Cl.: B60N 2/48

(54) **KOPFSTÜTZE FÜR EIN FAHRZEUG**
HEAD REST FOR A VEHICLE
APPUIE-TÊTE POUR VÉHICULE

(30) Priorität: 31.08.2007 DE 102007041498
(43) Veröffentlichungstag der Anmeldung: 16.06.2010
(73) Patentinhaber: Johnson Controls GmbH, 51399 Burscheid (DE)
(72) Erfinder: FRÖSE, Ernst-Otto, 42699 Solingen (DE); DILLINGER, Thomas, 42929 Wermelskirchen (DE); HASLER, Alexander, 40219 Düsseldorf (DE)
(74) Vertreter: Schwöbel, Thilo K.
(86) Internationale Anmeldenummer: PCT/EP2008/007027
(87) Internationale Veröffentlichungsnummer: WO 2009/030415

(56) Entgegenhaltungen:
- EP-A- 0 974 484
- DE-A1- 3 900 495
- DE-B3-102004 016 474
- DE-B3-102006 001 143
- DE-C1- 19 941 712
- US-A- 2 973 029
- US-A1- 2005 077 762

## Beschreibung

Die Erfindung betrifft eine Kopfstütze für einen Fahrzeugsitz, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist, (s. zum Beispiel die Druckschrift DE 10 2006 00143 B3, dem Oberbegriff des Anspruchs 1 entsprechend).

### Stand der Technik

Aus der Druckschrift DE 199 23 909 A1 ist eine Kopfstütze bekannt, die aus einem mit der Rückenlehne des Fahrzeugsitzes über Haltestangen starr, gegebenenfalls auch höhenverstellbar verbundenen Grundkörper besteht, der in einem wannenartig ausgebildeten Polstersegment angeordnet ist. Bei einem Unfall wird das Polstersegment translatorisch zum Kopf des Sitzinsassen hin bewegt, um einem Schleudertrauma vorzubeugen. Die hierzu erforderliche Kraft wird durch eine in Verlagerungsrichtung vorgespannte Feder innerhalb einer teleskopartigen Führungseinrichtung erzeugt. In der Offenlegungschrift DE 39 00 495 A1 wird eine weitere Kopfstütze beschrieben, bei welcher ein Polstersegment unfallbedingt gegenüber dem Grundkörper um eine feste Drehachse nach vorne schwenkbar ist. Als Antriebseinrichtung dient eine federbelastete Kolben/Zylinderanordnung in Verbindung mit einem Stützhebel, bei welcher der die Kolbenstange im Bereich der Drehachse am Grundkörper und der Zylinder am Polstersegment angelenkt ist. Aus der Druckschrift DE 199 41 712 C1 ist ferner eine Kopfstütze bekannt, bei welcher ein verlagerbares Polsterelement mit dem Grundkörper über einen Scherenmechanismus verbunden ist, mittels dessen das Polsterelement aus einer Ruhestellung nach vorne in eine Gebrauchsstellung bewegbar ist. Eine Kopfstütze ist ferner auch aus der Druckschrift DE 10 2004 016 474 B3 bekannt. Hierbei werden Teilstücke der Kopfstütze teleskopartig auseinanderbewegt, um eine Sicherheitsstellung der Kopfstütze einzunehmen. Ferner ist aus der Druckschrift DE 103 48 939 B3 eine Kopfstütze für einen Fahrzeugsitz bekannt, bei der die Kopfstütze aus Komfortgründen gemäß eines Bewegungsablaufs verstellt wird und wobei ein anderer Bewegungsablauf durchgeführt wird, wenn die Kopfstütze im Falle eines Unfalls von ihrer Normalposition in eine Schutzposition überführt wird.

Schtießlich ist aus der Druckschrift DE 10 2005 052 766 B3 eine linear verstellbare, aktive Kopfstütze bekannt.

Der Erfindung liegt die Aufgabe zugrunde, eine Kopfstütze mit einer einfach sowie kompakt aufgebauten und wirkungsvollen Antriebseinrichtung bereitzustellen, die in einer normalen Benutzungssituation eine optimale Bedienbarkeit gewährleistet und in einer Unfallsituation eine optimale Sicherheit für einen Sitzinsassen gewährleistet.

Die Aufgabe wird gelöst durch eine Kopfstütze für einen Fahrzeugsitz, bei welcher zumindest ein dem Kopf des Sitzinsassen zugewandtes erstes Teilstück der Kopfstütze unfallbedingt unter der Wirkung einer Relativbewegung eines im wesentlichen zwischen dem ersten Teilstück und einem dritten Teilstück angeordneten zweiten Teilstücks der Kopfstütze aus einer Gebrauchsstellung zum Kopf des Sitzinsassen hin entlang einer Verlagerungsrichtung in eine Sicherheitsstellung und eine Komfortstellung verlagerbar ist, wobei die Relativbewegung der Teilstücke eine Drehung um eine zur Verlagerungsrichtung im wesentlichen parallele Drehachse ist, dadurch gekennzeichnet, dass das zweite Teilstück ein Komformtteilstück und ein Sicherheitsteilstück aufweist, wobei des Komfortteilstück zur Komfortvestellung ausgehend von einer der Gebrauchsstellung des ersten Teilstücks enstsprechenden Position von der Position des Sicherheitsteilstücks entfernbar ist. Hierdurch wird in einfacher Weise ein robuster und zuverlässiger Mechanismus sowohl zur Komfortverstellung als auch zur Sicherheitsverstellung der Kopfstütze bzw. des ersten Teilstücks der Kopfstütze bereitgestellt und es ist in einfacher Weise möglich, im wesentlichen beruhend auf den gleichen Mechanismen bzw. beruhend auf den gleichen Teilen der Kopfstütze sowohl eine Komfortverstellung als auch eine Sicherheitsverstellung zu realisieren. Es kann erfindungsgemäß insbesondere vorgesehen sein, dass der Bereich zwischen der Gebrauchsstellung und der Sicherheitsstellung größer ist als der Bereich zwischen der Gebrauchsstellung und der maximal einstellbaren Komfortstellung. Ferner kann es erfindungsgemäß alternativ dazu vorgesehen sein, dass der Bereich zwischen der Gebrauchsstellung und der Sicherheitsstellung dem Bereich zwischen der Gebrauchsstellung und der maximal einstellbaren Komfortstellung entspricht, dass also die Sicherheitsstellung der maximal einstellbaren Komfortstellung entspricht.

Ferner ist es erfindungsgemäß bevorzugt, dass das Komfortteilstück zur Komfortverstellung bis in eine der Sicherheitsstellung des ersten Teilstücks entsprechenden Position unabhängig von der Position des Sicherheitsteilstücks verstellbar ist. Hierdurch wird in vorteilhafter Weise für den Verstellbereich, der der Komfortverstellung zugänglich ist, der maximale Verstellbereich gewählt, so dass eine solche Kopfstütze besonders hohe Komfortansprüche zu befriedigen in der Lage ist.

Weiterhin ist es erfindungsgemäß auch bevorzugt, dass die Bewegung des Sicherheitsteilstücks bei einer Auslösung bis zur Position des Komfortteilstücks im wesentlichen lastfrei vorgesehen ist. Hierdurch kann für die Bewegung der Einstellung der Sicherheitsstellung in vorteilhafter Weise ausgenutzt werden, dass im wesentlichen kein Energieanteil oder nur ein vergleichsweise geringer Energieanteil der in einem Aktuator gespeicherten Energie zur Bewegung des Sicherheitsteilstücks bis zur Position des Komfortteilstücks verwendet wird.

Weiterhin ist es erfindungsgemäß bevorzugt, dass das erste Teilstück wenigstens eine erste Schrägfläche und das zweite Teilstück wenigstens eine zweite Schrägfläche aufweist bzw. dass das dritte Teilstück wenigstens eine dritte Schrägfläche und das zweite Teilstück wenigstens eine vierte Schrägfläche aufweist, wobei wenigstens ein Teil der Schrägflächen im wesentlichen helixförmig um die Drehachse verlaufen und bei einer Relativbewegung des zweiten Teilstücks um die Drehachse eine Bewegung des ersten bzw. zweiten Teilstücks entlang der Verlagerungsrichtung bewirken. Hierdurch kann zum einen eine besonders wirkungsvolle Umsetzung der rotatorischen Bewegung des zweiten Teilstücks in eine translatorische Bewegung des ersten Teilstücks bewirkt werden und zum anderen kann durch die Bereitstellung von zwei Schrägflächenpaarungen (nämlich zwischen dem ersten Teilstück und dem zweiten Teilstück einerseits und zwischen dem zweiten Teilstück und dem dritten Teilstück andererseits) bei gleichem Drehwinkel der Rotationsbewegung des zweiten Teilstücks eine Vergrößerung der Translationsbewegung des ersten Teilstücks in die Verlagerungsrichtung durch eine gegenläufige Anordnung der Schrägflächenpaarungen bewirkt werden.

Gemäß der vorliegenden Erfindung ist es ferner bevorzugt, dass eine beidseitige Wirkung der ersten und zweiten Schrägflächen und/oder eine beidseitige Wirkung der dritten und vierten Schrägflächen vorgesehen ist. Hierdurch ist es möglich, dass im wesentlichen jeder translatorischen Einstellung des ersten Teilstücks der Kopfstütze eine vergleichsweise gut definierte rotatorische bzw. rotatorische und translatorische Einstellung des zweiten Teilstücks der Kopfstütze entspricht. Insbesondere ist es hierdurch erfindungsgemäß möglich, dass die Kopfstütze in einfacher Weise nach einer Auslösung (d.h. nach der Einstellung der Sicherheitsstellung) wieder zurückgestellt werden kann.

Weiterhin ist erfindungsgemäß bevorzugt, dass die vierte Schrägfläche am Komfortteilstück vorgesehen ist. Dies hat den Vorteil, dass eine besonders stabile Kraftübertragung zwischen dem ersten Teilstück und dem dritten Teilstück - nämlich ausschließlich über das Komfortteilstück des zweiten Teilstücks - realisierbar ist.

Erfindungsgemäß ist es ferner bevorzugt, wenn eine Blockiereinrichtung zur Blockierung oder Verringerung einer Bewegung des ersten Teilstücks der Kopfstütze entgegen der Verlagerungsrichtung vorgesehen ist, wobei die Blockiereinrichtung eine Verzahnung im Bereich der dritten Schrägfläche und der vierten Schrägfläche aufweist. Hierdurch wird ein einfacher und dennoch sicherer Weise eine Blockiermöglichkeit derart geschaffen, dass nach einer Auslösung des Sicherheitsmechanismus der Kopfstütze das erste Teilstück nicht mehr oder zumindest nicht mehr wesentlich zurück in Richtung der Gebrauchsstellung verschoben wird.

Erfindungsgemäß ist ferner bevorzugt, dass die Blockiereinrichtung wenigstens einen Blockierstift aufweist, wobei insbesondere der Blockierstift im Normalfall im Sinne eines Eingriffs der Verzahnung federvorbelastet vorgesehen ist, wobei insbesondere eine Verzahnung derart vorgesehen ist, dass eine Bewegung entgegen der Verlagerungsrichtung der Kopfstütze bzw. des ersten Teilstücks der Kopfstütze verhindert wird, und wobei ganz besonders bevorzugt die Verzahnung derart vorgesehen ist, dass eine Bewegung in Verlagerungsrichtung der Kopfstütze bzw. des ersten Teilstücks der Kopfstütze erlaubt. Hierdurch ist es erfindungsgemäß zum einen möglich, dass trotz der Komforteinstellungsmöglichkeit eine sichere Blockierung der Kopfstütze in der Sicherheitsstellung möglich ist. Zum anderen ist es möglich, dass eine Komforteinstellung der Kopfstütze in horizontaler Richtung - d.h. eine Verschiebung des ersten Teilstücks in Verlagerungsrichtung oder in Gegenrichtung zu Komfortzwecken - in einfacher Weise dadurch möglich ist, dass zur Bewegung der Kopfstütze bzw. des ersten Teilstücks der Kopfstütze entgegen die Verlagerungsrichtung ein Betätigungselement gedrückt wird und dass eine gewünschte Verlagerung der Kopfstütze bzw. des ersten Teilstücks der Kopfstütze in Richtung der Verlagerungsrichtung ohne eine Betätigung eines Betätigungselements eine Verlagerung trotz des Verzahnungseingriffs möglich ist.

Ferner ist es erfindungsgemäß bevorzugt, dass zwischen dem zweiten und dritten Teilstück und/oder zwischen dem ersten und zweiten Teilstück eine in nichtausgelöstem Zustand vorgespannte Schenkelfeder vorgesehen ist. Hierdurch kann in einfacher und wirkungsvoller Weise die Einstellung der Sicherheitsstellung bewirkt werden.

Weiterhin ist es erfindungsgemäß ferner bevorzugt, dass nach einer Auslösung das Sicherheitsteilstück oder das Komfortteilstück und das Sicherheitsteilstück aufgrund einer Verschiebung des ersten Teilstücks entgegen der Verlagerungsrichtung in die der Gebrauchsstellung entsprechende Position bringbar sind. Hierdurch kann in einfacher Weise eine einmal ausgelöste Kopfstütze bzw. eine Kopfstütze mit unfallbedingt aktiviertem Sicherheitsmechanismus wieder in die Gebrauchsstellung bewegt werden, ohne beispielsweise eine Öffnung der Kopfstütze vorzunehmen, was die Instandhaltungskosten bzw. die Reparaturkosten - insbesondere für den Fall eine ungerechtfertigten Auslösung der Einstellung der Sicherheitsstellung - deutlich vermindert.

Die Figuren stellen beispielhaft und schematisch verschiedene Ausführungen der Erfindung dar.

Es zeigen:
Figur 1 einen Fahrzeugsitz mit einer Kopfstütze,
Figuren 2a bis 2d Schnitte durch eine in die Kopfstütze einsetzbare Antriebseinrichtung in unterschiedlichen Funktionsstellungen,
Figuren 3 bis 8 verschiedene Ausführungsformen bzw. Details der erfindungsgemäßen Kopfstütze.

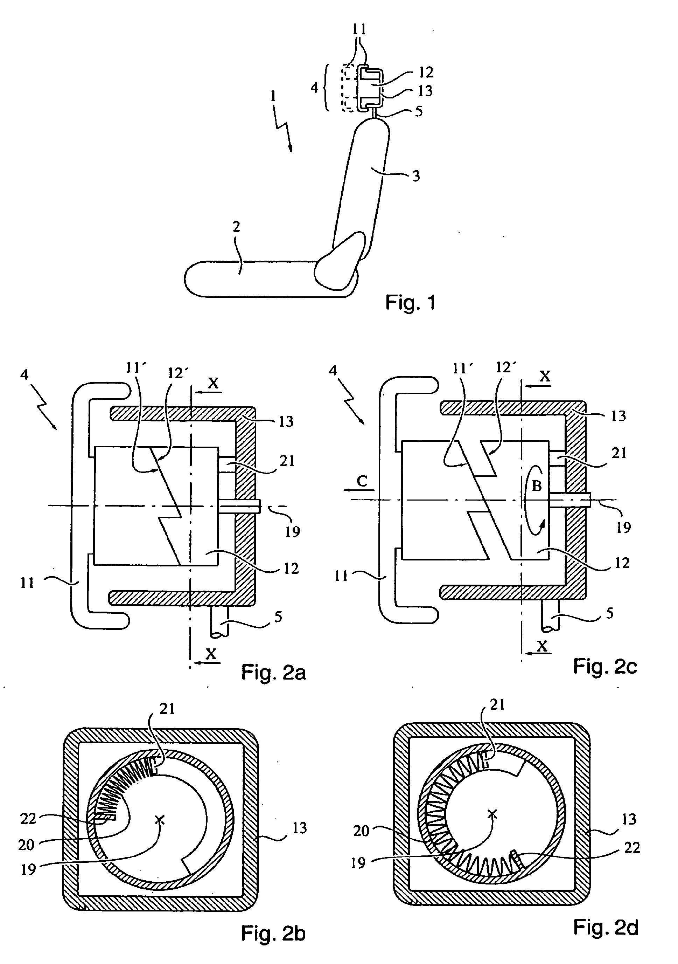

Gemäß der Figur 1 umfasst ein erfindungsgemäßer Fahrzeugsitz 1 bzw. ein mit einer erfindungsgemäßen Kopfstütze 4 ausgestatteter Fahrzeugsitz 1 ein Sitzteil 2 und eine mit diesem insbesondere neigungsverstellbar verbundenen Rückenlehne 3, welche mit der Kopfstütze 4 ausgestattet ist. Paarige Haltestangen 5 können zur Befestigung der Kopfstütze an der Rückenlehne 3 vorgesehen sein. Es können jedoch auch alternativ andere Befestigungsmöglichkeiten (nicht dargestellt) zwischen der Rückenlehne 3 und der Kopfstütze 4 vorgesehen sein. Die paarigen Haltestangen 5 der Kopfstütze 4 können im oberen Bereich der Rückenlehne 3 oder im Bereich der Kopfstütze 4 über ein Gelenk (nicht dargestellt) mit der Rückenlehne 3 bzw. mit der Kopfstütze 4 schwenkbar verbunden sein. Die Kopfstütze 4 weist erfindungsgemäß wenigstens ein dem Kopf des Sitzinsassen zugewandtes erstes Teilstück 11 der Kopfstütze 4 auf, das unfallbedingt unter der Wirkung einer Relativbewegung eines im wesentlichen zwischen dem ersten Teilstück 11 und einem dritten Teilstück 13 angeordneten zweiten Teilstücks 12 der Kopfstütze 4 aus einer Gebrauchsstellung (mit durchgezogener Linie in Figur 1 gezeichnet) zum Kopf des Sitzinsassen hin entlang einer Verlagerungsrichtung in eine Sicherheitsstellung (mit gestrichelter Linie in Figur 1 gezeichnet) verlagerbar ist. Bei dem ersten Teilstück 11 handelt es sich insbesondere um ein Polsterelement, an welches der Kopf des Sitzinsassen angelegt bzw. abgestützt werden kann. Bei dem dritten Teilstück 13 der Kopfstütze 4 handelt es sich insbesondere um einen Grundkörper der Kopfstütze 4, der über die Haltestangen 5 starr oder auch höhen und/oder neigungsverstellbar mit der Rückenlehne 3 verbunden ist. Innerhalb der Kopfstütze 4 ist zwischen dem ersten Teilstück 11 und dem dritten Teilstück 13 eine nachfolgend im Einzelnen beschriebene und das zweite Teilstück 12 aufweisenden Antriebseinrichtung angeordnet, welche die Verlagerung des ersten Teilstücks 11 in einer Bewegungsrichtung C auf den Kopf des Sitzinsassen hin bewirkt.

Gemäß der Figuren 2a bis 2d ist die Relativbewegung der Teilstücke 11, 12, 13 der erfindungsgemäßen Kopfstütze 4 in schematischer Weise näher dargestellt. Hierbei zeigen die Figuren 2a und 2b den Zustand der Kopfstütze in der Gebrauchsstellung und die Figuren 2c und 2d den Zustand der Kopfstütze in der Sicherheitsstellung (Verlagerung des ersten Teilstücks 11 in Richtung auf den Sitzinsassen zu, Bewegungsrichtung C), wobei die Figur 2b eine vordere Schnittdarstellung der in Figur 2a in einer seitlichen Schnittdarstellung abgebildeten Kopfstütze 4 gemäß der Schnittlinie X-X der Figur 2a darstellt und wobei die Figur 2d eine vordere Schnittdarstellung der in Figur 2c in einer seitlichen Schnittdarstellung abgebildeten Kopfstütze 4 gemäß der Schnittlinie X-X der Figur 2c darstellt. Die Antriebseinrichtung umfasst das zweite Teilstück 12 der Kopfstütze 4, das um eine Drehachse 19 drehbar mit dem dritten Teilstück 13 bzw. Grundkörper der Kopfstütze 4 verbunden ist. Eine im Bereich zwischen zwei Angriffspunkten 21 und 22 lediglich schematisch dargestellte vorgespannte Feder 20 ist - je nach Vorspannung - entweder in der Lage, nach Lösung einer nicht dargestellten Verriegelungseinrichtung eine Bewegung von der Gebrauchsstellung in die Sicherheitsstellung zu bewirken oder aber eine Bewegung von der Sicherheitsstellung in die Gebrauchsstellung zu bewirken (falls die Bewegung von der Gebrauchsstellung in die Sicherheitsstellung durch beispielsweise einen Bowdenzug-Antrieb - etwa verknüpft mit dem Auftreten einer durch den Sitzinsassen hervorgerufenen Inertialkraft beispielsweise auf die Rückenlehne des Sitzes - erfolgt). Hierbei kann die Verriegelungseinrichtung beispielsweise durch eine elektromagnetisch aktuierte Halteeinrichtung gelöst werden oder aber es kann die Verriegelung der Vorspannung der Feder durch eine pyrotechnische Einrichtung gelöst werden, etwa durch Absprengen einer Haltenase oder eines Haltebolzens (nicht dargestellt). Bei einem Unfall (Fig. 2c, Fig. 2d) wird das zweite Teilstück 12 gegenüber dem dritten Teilstück 13 verdreht (Pfeil B): Aufeinander reibende Schrägflächen zwischen dem ersten Teilstück 11 und dem zweiten Teilstück 12 und/oder zwischen dem zweiten Teilstück 12 und dem dritten Teilstück 13 bewirken dabei eine axiale Kraft und eine Vorverlagerung des ersten Teilstücks 11 parallel zur Richtung der Drehachse 19 in Richtung des Pfeiles C (Verlagerungsrichtung). Die mit 11' bzw. 12' bezeichneten und zueinander weisenden Stirnflächen des ersten Teilstücks 11 (nachfolgend auch als erste Schrägflächen 11' bezeichnet) bzw. des zweiten Teilstücks 12 (nachfolgend auch als zweite Schrägflächen 12' bezeichnet) sind Vorzugs weise als Schrägflächen derart ausgebildet, dass die rotative Bewegung des zweiten Teilstücks 12 in eine translative Bewegung des ersten Teilstücks 11 übersetzt wird. Eine Blockiereinrichtung kann an dieser Stelle (d.h. zwischen den ersten und zweiten Schrägflächen 11', 12') derart vorgesehen sein, dass ein Teil oder alle dieser ersten und zweiten Schrägflächen 11', 12' mit - beispielsweise sägezahnartigen - Verzahnungen ausgestattet sind, die eine Blockierung des ersten Teilstücks 11 in seiner ganz oder teilweise gemäß der Bewegungsrichtung C ausgefahrenen Lage ermöglichen, wenn auf das erste Teilstück 11 eine dieses in die Gebrauchsstellung zurückbewegende Kraft (beispielsweise nach oder während eines Unfalls ausgehend von dem Kopf des Fahrzeuginsassen) wirkt. Dritte und vierte Schrägflächen (in den Figuren 2a bis 2d nicht dargestellt) können entweder alternativ oder kumulativ zu ihrer Anordnung zwischen dem ersten Teilstück 11 und dem zweiten Teilstück 12 auch zwischen dem zweiten Teilstück 12 und dem dritten Teilstück 13 vorgesehen sein und alternativ oder kumulativ zu der Blockiereinrichtung im Bereich der ersten und zweiten Schrägflächen 11', 12' eine ähnlich aufgebaute Blockiereinrichtung aufweisen.

Gemäß der vorliegenden Erfindung ist es vorgesehen, dass die Verlagerung des ersten Teilstücks 11 in Verlagerungsrichtung C nicht nur in einer Unfallsituation, sondern auch für Komfortzwecke auf Wunsch eines Benutzers möglich ist. Es ist somit außer der Gebrauchsstellung nicht lediglich die Sicherheitsstellung des ersten Teilstücks 11 möglich, sondern wenigstens eine, bevorzugt jedoch eine Mehrzahl von Komfortstellungen. Hierbei ist es erfindungsgemäß insbesondere vorgesehen, dass die Komfortstellungen gerastert sind, d.h. es gibt kein Kontinuum an Einstellmöglichkeiten (sozusagen unendlich viele Komforteinstellungen), sondern eine begrenzte Zahl von beispielsweise zwischen 5 und 50, bevorzugt etwa 20 bis 30 einstellbaren Komfortstellungen. Erfindungsgemäß kann es hierbei vorgesehen sein, dass sich ausgehend von der Gebrauchsstellung der Verlagerungsweg in Verlagerungsrichtung für Komfortzwecke und der Verlagerungsweg zur Einstellung der Sicherheitsstellung vollständig überlappen oder dass entweder der Verlagerungsweg für Komfortzwecke größer ist als für Sicherheitszwecke oder umgekehrt der Verlagerungsweg für Komfortzwecke kleiner ist als für Sicherheitszwecke. Im nachfolgend ausgeführten Ausführungsbeispiel überlappen sich der Verlagerungsweg in Verlagerungsrichtung für Komfortzwecke und der Verlagerungsweg zur Einstellung der Sicherheitsstellung vollständig. Dies ist kann erfindungsgemäß beispielsweise derart realisiert sein, dass das zweite Teilstück 12 ein Komfortteilstück 122 und ein Sicherheitsteilstück 123 aufweist, wobei mittels einer Drehung des Komfortteilstücks 122 um die Drehachse 19 ausgehend von der Gebrauchsstellung oder ausgehend von einer Komfortstellung eine Bewegung des ersten Teilstücks 11 entlang der Verlagerungsrichtung C vorgesehen ist und wobei mittels einer Drehung des Sicherheitsteilstücks 123 um die Drehachse 19 eine zumindest teilweise Mitbewegung des Komfortteilstücks und eine Bewegung des ersten Teilstücks 11 entlang der Verlagerungsrichtung C vorgesehen ist. Der einfacheren Darstellung wegen ist jedoch in den Figuren 2a bis 2d weder das Sicherheitsteilstück 123 noch das Komfortteilstück 122 einzeln dargestellt.

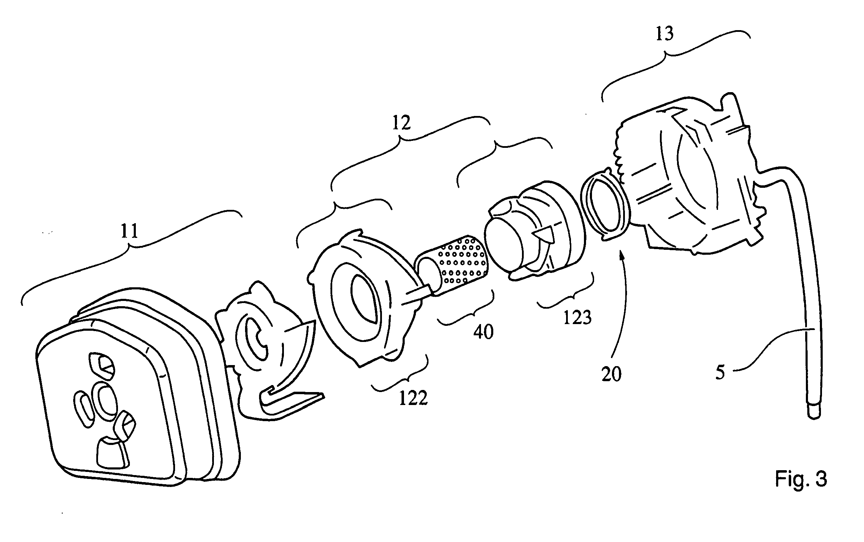

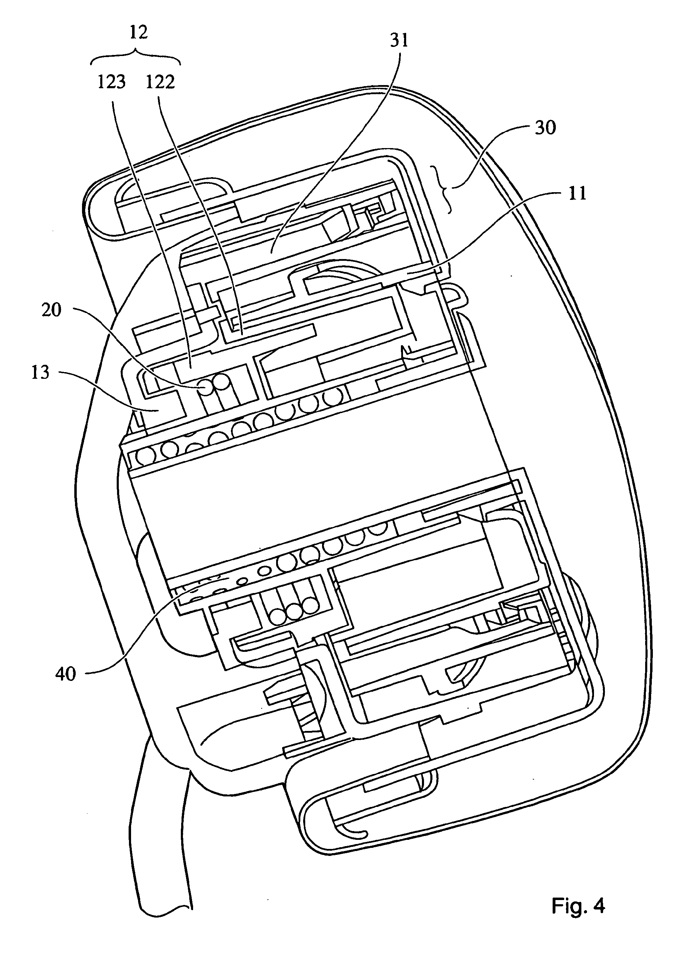

In den Figuren 3 bis 8 sind schematisch verschiedene Darstellungen einer erfindungsgemäßen Kopfstütze 4 dargestellt, wobei in Figur 3 eine Explosionsdarstellung und in den Figuren 4 bis 8 jeweils Schnittdarstellungen der Kopfstütze in verschiedenen Einstellungen bzw. Positionen dargestellt sind. Jeweils ist das erste Teilstück 11, das dritte Teilstück 13, die als Schenkelfeder 20 ausgebildete Feder 20, ein Lagerkäfig 40, die Haltestangen 5 für die Kopfstütze 4 und das zweite Teilstück 12 mit dem Komfortteilstück 122 und dem Sicherheitsteilstück 123 dargestellt.

Aus den Figuren 3 und 4 ist erkennbar, dass der Lagerkäfig 40 zwischen dem ersten Teilstück 11 und dem zweiten Teilstück 12 (bzw. zwischen dem ersten Teilstück 11 und dem Komfortteilstück 122 des ersten Teilstücks 12) angeordnet ist. Der Lagerkäfig 40 weist erfindungsgemäß bevorzugt eine Mehrzahl von Wälzkörpern 41 auf.

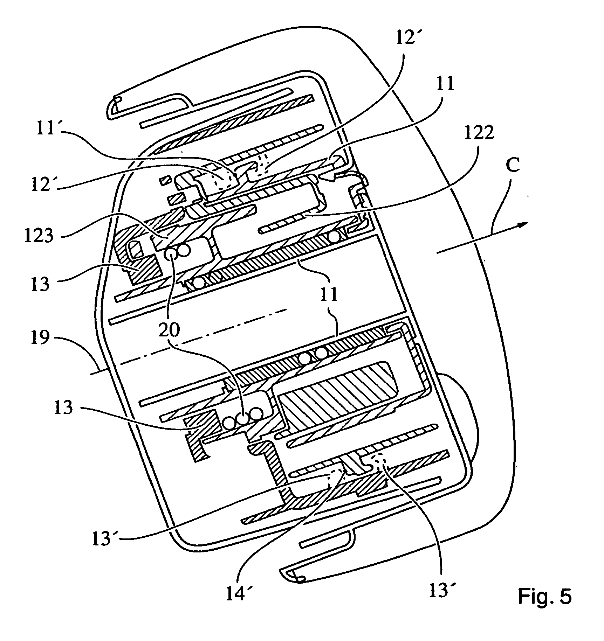

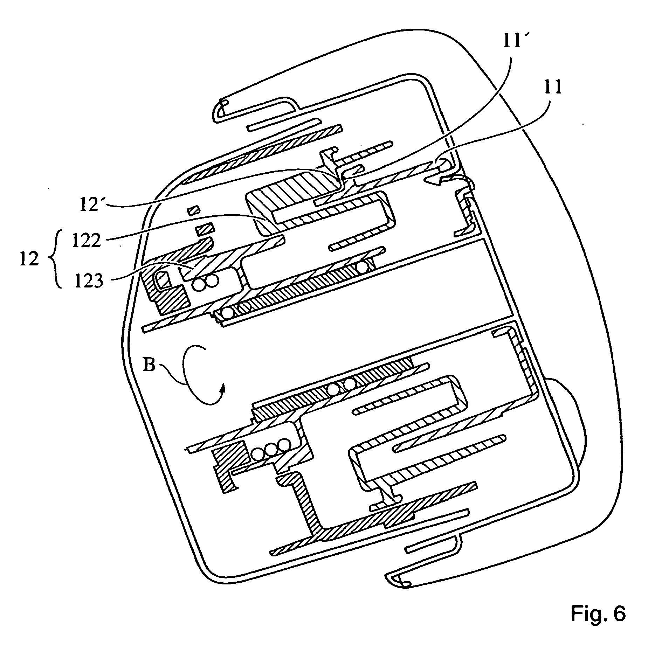

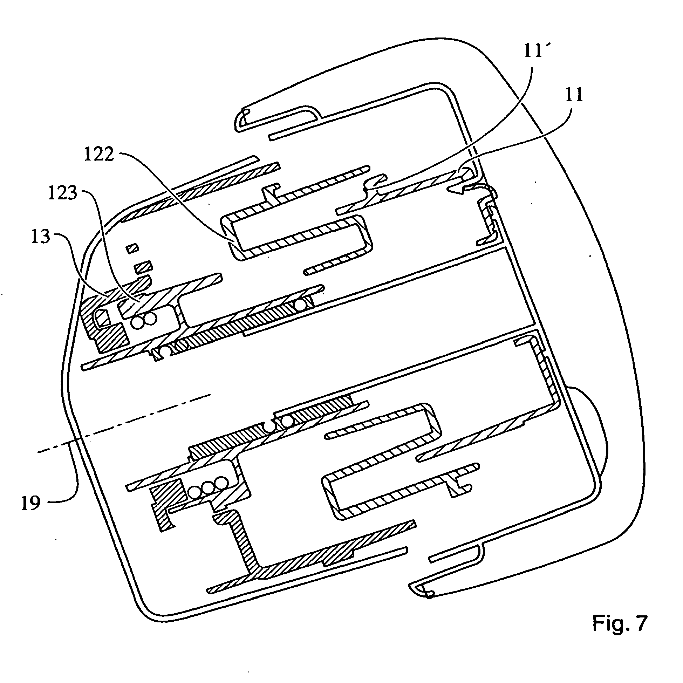

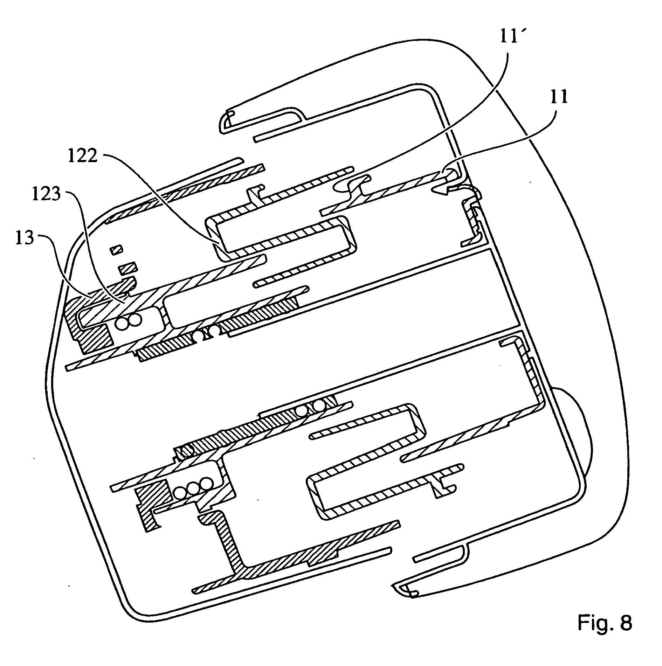

In den Figuren 5, 6, 7 und 8 sind in Schnittdarstellung verschiedene Einstellungen der Kopfstütze 4 bzw. des ersten Teilstücks 11 der Kopfstütze 4 relativ zur restlichen Kopfstütze 4 dargestellt, wobei in Figur 5 die Gebrauchsstellung dargestellt ist, in Figur 6 eine aus Komfortgründen teilweise (etwa zur Hälfte) ausgefahrene Stellung des ersten Teilstücks 11, in Figur 7 eine aus Komfortgründen maximal ausgefahrene Stellung des ersten Teilstücks 11 und in Figur 8 die Sicherheitsstellung.

Hierbei ist insbesondere aus einem Vergleich der Darstellungen in den Figuren 5, 6 und 7 erkennbar, dass ausgehend von der Gebrauchsstellung bei einer rotativen Bewegung (Gemäß dem Pfeil B) des Komfortteilstücks 122 ein translativer Abstand (in Richtung der Verlagerungsrichtung C) des Komfortteilstücks 122 vom Sicherheitsteilstück 123 einerseits sowie ein translativer Abstand (in Richtung der Verlagerungsrichtung C) des ersten Teilstücks 11 vom Komfortteilstück 122 andererseits herbeigeführt wird (vgl. die Figuren 5 und 6). Bei einer Weiterdrehung des Komfortteilstücks 122 vergrößert sich der translative Abstand (in Richtung der Verlagerungsrichtung C) des Komfortteilstücks 122 vom Sicherheitsteilstück 123 sowie der translative Abstand (in Richtung der Verlagerungsrichtung C) des ersten Teilstücks 11 vom Komfortteilstück 122 andererseits (vgl. die Figuren 6 und 7). Dieses Resultat wird durch die Schrägflächen 11', 12', 13' und 14' erzeugt. Hierbei können ein Teil der Schrägflächen - insbesondere die ersten Schrägflächen 11' und die vierten Schrägflächen 14' - als helixförmige Schrägflächen um den im wesentlichen zylindrischen Verlauf (an der jeweiligen Stelle) des ersten Teilstücks 11 einerseits und des zweiten Teilstücks 12 bzw. des Komfortteilstücks 122 andererseits vorgesehen sein, wobei insbesondere die jeweiligen Gegenflächen, d.h. die den ersten Schrägflächen 11' gegenüberliegenden zweiten Schrägflächen 12' bzw. die den vierten Schrägflächen 14' gegenüberliegenden dritten Schrägflächen 13', lediglich als Gegenlager bzw. Anschlagpunkte ausgeführt, die die jeweiligen Schrägflächen (d.h. die ersten Schrägflächen 11' und die vierten Schrägflächen 14') beidseitig gegen eine Verschiebung entlang der Verlagerungsrichtung C sichern, selbst aber nicht helixförmig ausgebildet sein müssen. Ein Beispiel hierfür ist schematisch in Figur 5 dargestellt, in der auf jeweils lediglich einer Seite der Drehachse 19 die zweiten Schrägflächen 12' und die vierten Schrägflächen 14' in punktierter Darstellung sowohl in Verlagerungsrichtung C oberhalb der ersten Schrägflächen 11' bzw. vierten Schrägflächen 14' als auch in Verlagerungsrichtung C unterhalb der ersten Schrägflächen 11' bzw. vierten Schrägflächen 14' angeordnet dargestellt sind. Die umfangsmäßige Erstreckung der zweiten Schrägflächen 12' bzw. der dritten Schrägflächen 13' um die Drehachse 19 kann sich hierbei auf einen Bereich von wenigen Winkelgraden bis etwa 10° bis 15° beschränken, weil die in diesem Ausführungsbeispiel helixförmigen ersten bzw. vierten Schrägflächen 11', 14' zwischen den die zweiten bzw. dritten Schrägflächen 12', 13' bildenden Anformungen in Verlagerungsrichtung C gehalten sind. Hierdurch ist ferner gewährleistet, dass eine vorgegebene relative Drehposition (im vorliegenden Fall zwischen dem ersten Teilstück 11 und dem Komfortteilstück 122 bzw. zwischen dem Komfortteilstück 122 und dem dritten Teilstück 13) mit einer vorgegebenen relativen translativen Position verknüpft ist. Entlang der Verlagerungsrichtung C gesehen, können die Schrägflächen 11', 12', 13', 14', insbesondere die helixförmigen ersten und vierten Schrägflächen 11', 14', beispielsweise dreifach entlang eines Umfangs beispielsweise des Komfortteilstücks 122 ausgelegt sein, so dass sich eine maximale Verdrehung des Komfortteilstücks 122 von maximal 120° ergibt, in der Regel von ca. 70° bis ca. 110°. Alternativ dazu können die Schrägflächen beispielsweise auch zweifach oder vierfach entlang eines Umfangs beispielsweise des Komfortteilstücks 122 ausgelegt sein.

Weiterhin verlaufen insbesondere die ersten Schrägflächen 11' und die vierten Schrägflächen 14' gegenläufig, so dass der Maximalhub des ersten Teilstücks 11 entlang der Verlagerungsrichtung C bei vergleichsweise kompaktem Aufbau der Kopfstütze 4 in Richtung dieser Verlagerungsrichtung C möglichst maximal ist.

Der Unterschied zwischen der Darstellung in Figur 8 und der Darstellung insbesondere in Figur 7 besteht im wesentlichen darin, dass die Feder 20, die in den in den Figuren 5, 6 und 7 dargestellten Situationen beispielsweise vorgespannt war, nunmehr durch die Lösung einer nicht dargestellten Verriegelungseinrichtung gelöst ist und zwischen dem dritten Teilstück 13, d.h. dem Grundkörper der Kopfstütze 4, und dem Sicherheitsteilstück 123 eine Bewegung (des ersten Teilstücks 11) in die Sicherheitsstellung herbeigeführt hat. Die Bewegung in die Sicherheitsstellung erfolgt beim dargestellten Ausführungsbeispiel dadurch, dass das Sicherheitsteilstück 123 durch die gelöste bzw. entriegelte Feder 20 oder durch einen sonstigen Antriebsmechanismus - etwa einen vom Sitzinsassen aufgrund von Inertialkräften angetriebenen Bowdenzug - rotativ um die Drehachse 19 bewegt wird. Falls sich das Komfortteilstück 122 nicht in der Drehposition gemäß der Figur 7 befindet (entsprechend der Sicherheitsstellung der Kopfstütze bzw. des ersten Teilstücks 11) schlägt ein Anschlag des Sicherheitsteilstücks 123 am Komfortteilstück 122 an und bewegt dieses rotativ (bzw. gemäß dem Ausführungsbeispiel rotativ und translativ) in die der Sicherheitsstellung entsprechende Position sowie damit ebenfalls das erste Teilstück 11 in die Sicherheitsstellung. Eine über einen Totgang hinausgehende entgegengesetzte Bewegung (entgegen der Verlagerungsrichtung C) des ersten Teilstücks 11 wird aufgrund einer nicht dargestellten Blockiereinrichtung 30 in Form einer Verzahnung im Bereich der dritten und vierten Schrägflächen 13', 14' verhindert. Hierzu ist zumindest eine Paarung aus helixförmiger Schrägfläche und nicht helixförmiger Schrägfläche gezahnt vorgesehen, d.h. von beispielsweise drei über den Umfang verteilten Schrägflächen ist lediglich eine gezahnt vorgesehen. Im Ausführungsbeispiel ist ferner vorgesehen, dass die gezahnte Fläche beispielsweise der dritten Schrägfläche 13' beispielsweise mittels eines ggf. federvorbelasteten Blockierstifts 31 von dem im Normalfall vorgesehenen Zahneingriff mit der vierten Schrägfläche 14 abgehoben werden kann und damit die Blockierwirkung der Blockiereinrichtung 30 aufgehoben werden kann. Hierdurch ist es - insbesondere für den Fall der Komforteinstellung, d.h. bei verriegelter Feder 20 - möglich, durch manuelle Betätigung des Blockierstifts 31 und durch Drücken auf das erste Teilstück 11 ein Verstellung des ersten Teilstücks 11 entgegen der Verlagerungsrichtung C zu erzielen. Auch bei entriegelter Feder 20 ist diese - nach Betätigung des Blockierstifts 31 im Sinne einer Deblockierung mögliche - Bewegung entgegen der Verlagerungsrichtung C gegen die Kraftwirkung der Feder 20 durchführbar und es ist damit gemäß der vorliegenden Erfindung auch nach einer Auslösung der Antriebseinrichtung prinzipiell möglich, die in die Sicherheitstellung eingestellte Kopfstütze wieder zurückzustellen.

**Bezugszeichenliste**

| | |
|---|---|
| 1 | Fahrzeugsitz |
| 2 | Sitzteil |
| 3 | Rückenlehne |
| 4 | Kopfstütze |
| 5 | Haltestange |
| 11 | erstes Teilstück der Kopfstütze |
| 11' | erste Schrägfläche |
| 12 | zweites Teilstück der Kopfstütze |
| 12' | zweite Schrägfläche |
| 13 | drittes Teilstück der Kopfstütze |
| 13' | dritte Schrägfläche |
| 14' | vierte Schrägfläche |
| 19 | Drehachse |
| 20 | Schenkelfeder |
| 21, 22 | Angriffspunkte |
| 30 | Blockiereinrichtung |
| 31 | Blockierstift |
| 40 | Lagerkäfig |
| 41 | Wälzkörper |
| 122 | Komfortteilstück |
| 123 | Sicherheitsteilstück |
| Pfeil B | Drehrichtung des Hohlzylinders |
| Pfeil C | Verschiebung / Verlagerung des Polsterkörpers |

## Patentansprüche

1. Kopfstütze (4) für einen Fahrzeugsitz (1), bei welcher zumindest ein dem Kopf des Sitzinsassen zugewandtes erstes Teilstück (11) der Kopfstütze unfallbedingt unter der Wirkung einer Relativbewegung eines im wesentlichen zwischen dem ersten Teilstück (11) und einem dritten Teilstück (13) angeordneten zweiten Teilstücks (12) der Kopfstütze aus einer Gebrauchsstellung zum Kopf des Sitzinsassen hin entlang einer Verlagerungsrichtung (C) in eine Sicherheitsstellung und eine Komfortstellung verlagerbar ist, wobei die Relativbewegung der Teilstücke (11, 12, 13) eine Drehung um eine zur Verlagerungsrichtung (C) im wesentlichen parallele Drehachse (19) ist, **dadurch gekennzeichnet, dass** das zweite Teilstück (12) ein Komfortteilstück (122) und ein Sicherheitsteilstück (123) aufweist, wobei das Komfortteilstück (122) zur Komfortverstellung ausgehend von einer der Gebrauchsstellung des ersten Teilstücks (11) entsprechenden Position von der Position des Sicherheitsteilstücks (123) entfernbar ist.

2. Kopfstütze nach Anspruch 1, **dadurch gekennzeichnet, dass** das Komfortteilstück (122) zur Komfortverstellung bis in eine der Sicherheitsstellung des ersten Teilstücks (11) entsprechenden Position unabhängig von der Position des Sicherheitsteilstücks (123) verstellbar ist.

3. Kopfstütze nach einem der vorhergehenden Ansprüche, **dadurch gekennzeichnet, dass** die Bewegung des Sicherheitsteilstücks (123) bei einer Auslösung bis zur Position des Komfortteilstücks (122) im wesentlichen lastfrei vorgesehen ist.

4. Kopfstütze nach einem der vorhergehenden Ansprüche, **dadurch gekennzeichnet, dass** das erste Teilstück (11) wenigstens eine erste Schrägfläche (11') und das zweite Teilstück (12) wenigstens eine zweite Schrägfläche (12') aufweist, wobei die ersten und/oder zweiten Schrägflächen (11', 12') im wesentlichen helixförmig um die Drehachse (19) verlaufen und bei einer Relativbewegung des zweiten Teilstücks (12) um die Drehachse (19) eine Bewegung des ersten Teilstücks (11) entlang der Verlagerungsrichtung (C) bewirken.

5. Kopfstütze nach einem der vorhergehenden Ansprüche, **dadurch gekennzeichnet, dass** das dritte Teilstück (13) wenigstens eine dritte Schrägfläche (13') und das zweite Teilstück (12) wenigstens eine vierte Schrägfläche (14') aufweist, wobei die dritten und/oder vierten Schrägflächen (13', 14') im wesentlichen helixförmig um die
Drehachse (19) verlaufen und bei einer Relativbewegung des zweiten Teilstücks (12) um die Drehachse (19) eine Bewegung des zweiten Teilstücks (12) entlang der Verlagerungsrichtung (C) bewirken.

6. Kopfstütze nach einem der vorhergehenden Ansprüche, **dadurch gekennzeichnet, dass** eine beidseitige Wirkung der ersten und zweiten Schrägflächen (11', 12') und/oder eine beidseitige Wirkung der dritten und vierten Schrägflächen (13', 14') vorgesehen ist.

7. Kopfstütze nach einem der vorhergehenden Ansprüche, **dadurch gekennzeichnet, dass** die vierte Schrägfläche (14') am Komfortteilstück (122) vorgesehen ist.

8. Kopfstütze nach einem der vorhergehenden Ansprüche, **dadurch gekennzeichnet, dass** eine Blockiereinrichtung (30) zur Blockierung oder Verringerung einer Bewegung des ersten Teilstücks (11) der Kopfstütze entgegen der Verlagerungsrichtung (C) vorgesehen ist, wobei die Blockiereinrichtung (30) eine Verzahnung im Bereich der dritten Schrägfläche (13') und der vierten Schrägfläche (14') aufweist.

9. Kopfstütze nach einem der vorhergehenden Ansprüche, **dadurch gekennzeichnet, dass** die Blockiereinrichtung (30) wenigstens einen Blockierstift (31) aufweist, wobei insbesondere der Blockierstift (31) im Normalfall im Sinne eines Eingriffs der Verzahnung federvorbelastet vorgesehen ist.

10. Kopfstütze nach einem der vorhergehenden Ansprüche, **dadurch gekennzeichnet, dass** zwischen dem zweiten und dritten Teilstück (12, 13) und/oder zwischen dem ersten und zweiten Teilstück (11, 12) eine in nichtausgelöstem Zustand vorgespannte Schenkelfeder (20) vorgesehen ist.

11. Kopfstütze nach einem der vorhergehenden Ansprüche, **dadurch gekennzeichnet, dass** nach einer Auslösung das Sicherheitsteilstück (123) oder das Komfortteilstück (122) und das Sicherheitsteilstück (123) aufgrund einer Verschiebung des ersten Teilstücks (11) entgegen der Verlagerungsrichtung (C) in die der Gebrauchsstellung entsprechende Position bringbar sind.

## Claims

1. Headrest (4) for a vehicle seat (1) in which, in the event of an accident, at least one first section (11) of the headrest that is oriented towards the head of the seat occupant may be displaced, due to the effect of a relative displacement of a second section (12) of the headrest that is arranged substantially between the first section (11) and a third section (13) from a working position into a safety position and a comfort position in the direction of the head of the seat occupant, in a direction of displacement (C), wherein the relative movement of the sections (11, 12, 13) is a rotation about a rotational axis (19) substantially parallel to the direction of displacement (C), **characterized in that** the second section (12) has a comfort section (122) and a safety section (123), the comfort section (122) being able to be moved away from the position of the safety section (123), starting from a position corresponding to the working position of the first section (11).

2. Headrest according to Claim 1, **characterized in that**, for adjusting the comfort, the comfort section (122) may be adjusted into a position corresponding to the safety position of the first section (11), irrespective of the position of the safety section (123).

3. Headrest according to one of the preceding claims, **characterized in that**, when activated, the movement of the safety section (123) is provided to be substantially load-free as far as the position of the comfort section (122).

4. Headrest according to one of the preceding claims, **characterized in that** the first section (11) has at least one first oblique surface (11') and the second section (12) has at least one second oblique surface (12'), the first and/or second oblique surfaces (11', 12') running substantially helically about the rotational axis (19) and, with a relative movement of the second section (12) about the rotational axis (19), effect a movement of the first section (11) in the direction of displacement (C).

5. Headrest according to one of the preceding claims, **characterized in that** the third section (13) has at least one third oblique surface (13') and the second section (12) has at least one fourth oblique surface (14'), the third and/or fourth oblique surfaces (13', 14') running substantially helically about the rotational axis (19) and, with a relative movement of the second section (12) about the rotational axis (19), effect a movement of the second section (12) in the direction of displacement (C).

6. Headrest according to one of the preceding claims, **characterized in that** the first and second oblique surfaces (11', 12') act on both sides and/or the third and fourth oblique surfaces (13', 14') act on both sides.

7. Headrest according to one of the preceding claims, **characterized in that** the fourth oblique surface (14') is provided on the comfort section (122).

8. Headrest according to one of the preceding claims, **characterized in that** a blocking device (30) is provided for blocking or reducing a movement of the first section (11) of the headrest counter to the direction of displacement (C), the blocking device (30) comprising teeth in the region of the third oblique surface (13') and the fourth oblique surface (14').

9. Headrest according to one of the preceding claims, **characterized in that** the blocking device (30) has at least one blocking pin (31), in particular the blocking pin (31) in the normal case being provided pretensioned by a spring for the purpose of an engagement of the teeth.

10. Headrest according to one of the preceding claims, **characterized in that** between the second and third section (12, 13) and/or between the first and second section (11, 12) a leg spring (20) is provided, pretensioned in the non-activated state.

11. Headrest according to one of the preceding claims, **characterized in that**, after activation, the safety section (123) or the comfort section (122) and the safety section (123) may be moved due to a displacement of the first section (11) counter to the direction of displacement (C) into the position corresponding to the working position.

## Revendications

1. Appui-tête (4) pour un siège de véhicule (1), dans lequel au moins une première pièce partielle (11) de l'appui-tête, tournée vers la tête de l'occupant du siège, peut être déplacée, de manière provoquée par un accident, sous l'effet d'un mouvement relatif d'une deuxième pièce partielle (12) de l'appui-tête, disposée essentiellement entre la première pièce partielle (11) et une troisième pièce partielle (13), à partir d'une position d'utilisation en direction de la tête de l'occupant du siège le long d'une direction de déplacement (C) jusqu'à une position de sécurité et/ou une position de confort, le mouvement relatif des pièces partielles (11, 12, 13) étant une rotation autour d'un axe de rotation (19) essentiellement parallèle à la direction de déplacement (C), **caractérisé en ce que** la deuxième pièce partielle (12) comprend une pièce partielle de confort (122) et une pièce partielle de sécurité (123), la pièce partielle de confort (122) pouvant être retirée de la position de la pièce partielle de sécurité (123), à partir d'une position correspondant à la position d'utilisation de la première pièce partielle (11), en vue d'un réglage de confort.

2. Appui-tête selon la revendication 1, **caractérisé en ce que**, pour le réglage de confort, la pièce partielle de confort (122) peut être déplacée, indépendamment de la position de la pièce partielle de sécurité (123), jusqu'à une position correspondant à la position de sécurité de la première pièce partielle (11).

3. Appui-tête selon l'une quelconque des revendications précédentes, **caractérisé en ce que** le mouvement de la pièce partielle de sécurité (123) s'effectue essentiellement sans charge jusqu'à la position de la pièce partielle de confort (122) lors d'un déclenchement.

4. Appui-tête selon l'une quelconque des revendications précédentes, **caractérisé en ce que** la première pièce partielle (11) comprend au moins une première surface oblique (11') et la deuxième pièce partielle (12) comprend au moins une deuxième surface oblique (12'), les première et/ou deuxième surfaces obliques (11', 12') s'étendant essentiellement en forme d'hélice autour de l'axe de rotation (19) et, lors d'un mouvement relatif de la deuxième pièce partielle (12) autour de l'axe de rotation (19), provoquant un mouvement de la première pièce partielle (11) le long de la direction de déplacement (C).

5. Appui-tête selon l'une quelconque des revendications précédentes, **caractérisé en ce que** la troisième pièce partielle (13) comprend au moins une troisième surface oblique (13') et la deuxième pièce partielle (12) comprend au moins une quatrième surface oblique (14'), les troisième et/ou quatrième surfaces obliques (13', 14') s'étendant essentiellement en forme d'hélice autour de l'axe de rotation (19) et, lors d'un mouvement relatif de la deuxième pièce partielle (12) autour de l'axe de rotation (19), provoquant un mouvement de la deuxième pièce partielle (12) le long de la direction de déplacement (C).

6. Appui-tête selon l'une quelconque des revendications précédentes, **caractérisé en ce qu'**une action bilatérale des première et deuxième surfaces obliques (11', 12') et/ou une action bilatérale des troisième et quatrième surfaces obliques (13', 14') sont prévues.

7. Appui-tête selon l'une quelconque des revendications précédentes, **caractérisé en ce que** la quatrième surface oblique (14') est prévue sur la pièce partielle de confort (122).

8. Appui-tête selon l'une quelconque des revendications précédentes, **caractérisé en ce qu'**il est prévu un dispositif de blocage (30) pour le blocage ou la réduction d'un mouvement de la première pièce partielle (11) de l'appui-tête en sens inverse de la direction de déplacement (C), le dispositif de blocage (30) comprenant une denture dans la région de la troisième surface oblique (13') et de la quatrième surface oblique (14').

9. Appui-tête selon l'une quelconque des revendications précédentes, **caractérisé en ce que** le dispositif de blocage (30) comprend au moins une goupille de blocage (31), la goupille de blocage (31) étant notamment généralement prévue de manière préchargée par ressort au sens d'un engagement de la denture.

10. Appui-tête selon l'une quelconque des revendications précédentes, **caractérisé en ce qu'**un ressort à branches (20) précontraint à l'état non déclenché est prévu entre la deuxième et la troisième pièce partielle (12, 13) et/ou entre la première et la deuxième pièce partielle (11, 12).

11. Appui-tête selon l'une quelconque des revendications précédentes, **caractérisé en ce qu'**après un déclenchement, la pièce partielle de sécurité (123) ou la pièce partielle de confort (122) et la pièce partielle de sécurité (123) peu(ven)t être amenée(s), en raison d'un déplacement de la première pièce partielle (11) en sens inverse de la direction de déplacement (C), jusqu'à la position correspondant à la position d'utilisation.
